# EUROPEAN PATENT APPLICATION

(11) **EP 4 672 015 A1**
(43) Date of publication of application: **31.12.2025**
(21) Application number: 25183298.6
(22) Date of filing: 17.06.2025
(51) Int. Cl.: G06F 16/16, G06F 16/901, G06F 16/9032, G06F 40/40, G06F 40/20

(54) **INTERMEDIATE STORAGE DEVICE, COMPUTER SYSTEM, AND COMPUTER COMMAND PREPROCESSING METHOD**

(30) Priority: 28.06.2024 TW 113124434
(71) Applicant: Giga-Byte Technology Co., Ltd., New Taipei City 231 (TW)
(72) Inventor: WU, Tsung-Ta, New Taipei City 231 (TW); HSU, Shu-Yu, New Taipei City 231 (TW); TSAI, Hsing-Feng, New Taipei City 231 (TW); WU, Hua-Yi, New Taipei City 231 (TW)
(74) Representative: Viering, Jentschura & Partner mbB Patent- und Rechtsanwälte

(57) **Abstract**

An intermediate storage device (300) a computer (10) system, and a computer (10) command preprocessing method are provided. The intermediate storage device (300) includes a model storage unit (310), a data storage unit (320), an AI selecting unit (330), and an access control unit (340). The model storage unit (310) stores a plurality of language models. The data storage unit (320) stores a plurality of file data. The AI selecting unit (330) selects a language model based a model operation command (331), and the language model executes the model operation command (331) and generates a generation result. The access control unit (340) connect to the data storage unit (320) and the model storage unit (310). The access control unit (340) determines whether an input command (210) is a model operation command (331) or a data access command (332). The input command (210) is the model operation command (331), the access control unit (340) forwards the model operation command (331) to the AI selecting unit (330) and send the output data (334) to the access control unit (340).

## Description

### BACKGROUND

### Technical Field

This application relates to a storage device, a computer, and a computer command processing method, and in particular, to an intermediate storage device, a computer system, and a computer command preprocessing method.

### Related Art

The emergence of Artificial Intelligence (AI) brings many new possibilities to the human society. In addition, the development of a large language model (LLM) lays a foundation for a breakthrough of AI technologies. The LLM is an AI model that can process and generate natural language, and requires a large amount of data and computing resources for training. Therefore, storage of the LLM has also become an important challenge for the development of the AI technologies.

Currently, interaction information between the LLM and a user is transmitted through the Internet. Although information may be transmitted through encryption, there is still a risk that personal information or commercial confidences may be leaked out.

### SUMMARY

In view of this, in an embodiment, an intermediate storage device is provided, including a model storage unit, a data storage unit, an AI selecting unit, and an access control unit. The model storage unit stores a plurality of language models. The data storage unit stores a plurality of groups of file data. The AI selecting unit selects a language model based on a model operation command, to cause the selected language model to execute the model operation command and generate output data. The access control unit is connected to the data storage unit and the model storage unit, where the access control unit receives an input command, and the access control unit determines whether the input command is the model operation command or a data access command. If the input command is the model operation command, the access control unit forwards the model operation command to the AI selecting unit, to cause the selected language model to generate output data, and the access control unit generates a generation result based on the output data. If the input command is the data access command, the access control unit accesses corresponding file data from the data storage unit based on the data access command. The intermediate storage device may directly invoke a language model of a local end, and select a corresponding language model based on different application scenarios.

In an embodiment, the AI selecting unit further includes a real-time operating system, where the real-time operating system transmits the output data to the access control unit.

In an embodiment, the access control unit sends the output data or the selected file data to an upper-layer operating system.

In an embodiment, a transmission interface is further included, where the access control unit is connected to the transmission interface, and a type of the transmission interface includes an advanced technology attachment interface, a serial ATA interface, a universal serial bus, a peripheral component interconnect express interface, or a non-volatile memory express.

In an embodiment, an intermediate storage device is provided, and includes a plurality of model storage units, a data storage unit, an AI selecting unit, and an access control unit. Each model storage unit stores a language model. The data storage unit stores a plurality of groups of file data. The AI selecting unit is connected to the model storage unit, where the AI selecting unit selects a language model based on a model operation command, and the selected language model executes the model operation command and generates output data. The access control unit is connected to the data storage unit and the AI selecting unit, where the access control unit receives an input command, and the access control unit determines whether the input command is a model operation command or a data access command. If the input command is the model operation command, the access control unit forwards the model operation command to the AI selecting unit, to cause the selected language model to generate the output data, and the access control unit generates a generation result based on the output data. If the input command is the data access command, the access control unit accesses corresponding file data from the data storage unit based on the data access command.

In an embodiment, the AI selecting unit further includes a real-time operating system, where the real-time operating system transmits the output data to the access control unit.

In an embodiment, the access control unit sends the output data or the selected file data to an upper-layer operating system.

In an embodiment, a transmission interface is further included, where the access control unit is connected to the transmission interface, and a type of the transmission interface includes an advanced technology attachment interface, a serial ATA interface, a universal serial bus, a peripheral component interconnect express interface, or a non-volatile memory express.

In an embodiment, a computer is provided, including a processor and an intermediate storage device. The processor executes an upper-layer operating system, where the processor receives an input command through the upper-layer operating system. The intermediate storage device is connected to the processor, where the intermediate storage device includes at least one model storage unit, a data storage unit, an AI selecting unit, and an access control unit; the access control unit is connected to the data storage unit, the AI selecting unit, and each model storage unit; each model storage unit stores a language model; and the data storage unit stores a plurality of groups of file data. The upper-layer operating system transmits the input command to the access control unit, and the access control unit determines whether the input command is a model operation command or a data access command. If the input command is the model operation command, the access control unit forwards the model operation command to the AI selecting unit, to cause the selected language model to generate output data. If the input command is the data access command, the access control unit accesses corresponding file data from the data storage unit based on the data access command.

A computer command preprocessing method is provided, including: receiving, by an access control unit of an intermediate storage device, an input command; determining, by the access control unit, whether the input command is a model operation command or a data access command; sending, by the access control unit, the model operation command to an AI selecting unit if the input command is the model operation command; selecting, by the AI selecting unit, one of a plurality of language models based on the model operation command, where the selected language model is a selected model; generating, by the selected model, output data based on the model operation command; and generating, by the access control unit, a generation result based on the output data.

In an embodiment, the step of selecting, by the AI selecting unit, one of a plurality of language models based on the model operation command, where the selected language model is a selected model includes: selecting, by the AI selecting unit, one of a plurality of model storage units, where each model storage unit stores a corresponding language model.

In an embodiment, the step of selecting, by the AI selecting unit, one of a plurality of language models based on the model operation command, where the selected language model is a selected model includes: storing the language models in a model storage unit; and selecting, by the AI selecting unit, the language model from the model storage unit.

In an embodiment, if the input command is the data access command, the access control unit accesses corresponding file data from the data storage unit based on the data access command.

The intermediate storage device, the computer system, and the computer command preprocessing method provide a large language model that may be used in a local computer. In this way, a risk of information leakage during network communication can be avoided, a speed of invoking the large language model can also be accelerated, thereby accelerating information response time. In addition, large language models for different application scenarios may be deployed in the computer, so that services related to a plurality of different application scenarios can be provided in the same computer.

### BRIEF DESCRIPTION OF THE DRAWINGS

FIG. 1 is a schematic diagram of a hardware architecture of an intermediate storage device according to an embodiment;
FIG. 2A is a schematic diagram of a system architecture used in a computer according to an embodiment;
FIG. 2B is a schematic diagram of loading a selected model to a data storage unit according to an embodiment;
FIG. 3 is a schematic flowchart of a computer command preprocessing method according to an embodiment;
FIG. 4 is a schematic diagram of components of an AI selecting unit according to an embodiment; and
FIG. 5 is a schematic diagram of a system architecture used in a computer according to another embodiment.

### DETAILED DESCRIPTION

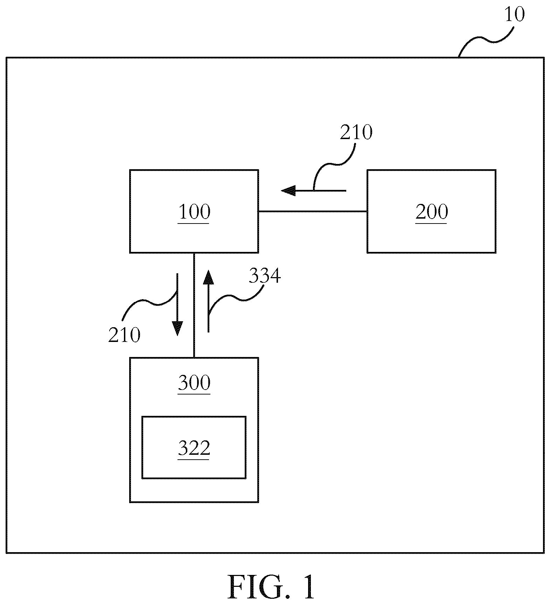

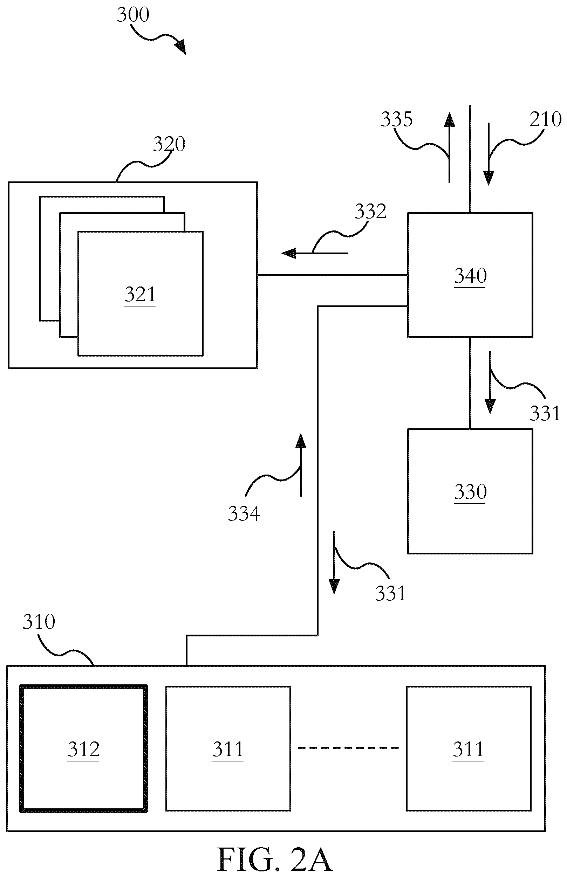

FIG. 1 and FIG. 2A are respectively a schematic diagram of a hardware architecture of an intermediate storage device 300 and a schematic diagram of a system architecture used in a computer 10 according to an embodiment. The computer 10 includes a processor 100 and the intermediate storage device 300. The intermediate storage device 300 is connected to the processor 100, and receives an input command 210 sent by the processor 100. The computer 10 may receive the input command 210 through an input device 200, or may issue the input command 210 to the intermediate storage device 300 when the processor 100 executes an application program. The computer 10 may be an electronic device, such as a personal computer, a notebook computer, a tablet computer, or a mobile phone. The computer 10 executes a corresponding upper-layer operating system (OS) 322. A type of the upper-layer operating system 322 may include a Windows operating system of the Microsoft company, an OSX operating system of the Apple company, a Linux operating system, or the like.

The intermediate storage device 300 may be applied to a serial advanced technology attachment (SATA), a serial attached SCSI (SAS), a peripheral component interconnect express (PCIe), a non-volatile memory express (NVMe), a universal serial bus (USB), an external serial advanced technology attachment (eSATA), a small computer system interface (SCSI), integrated drive electronics (IDE), a next generation form factor (M.2), a universal serial bus (USB), or a thunderbolt.

The intermediate storage device 300 includes a model storage unit 310, a data storage unit 320, an artificial intelligence selecting unit (hereinafter referred to as an AI selecting unit 330), and an access control unit 340. The access control unit 340 is connected to the model storage unit 310, the data storage unit 320, and the AI selecting unit 330. The model storage unit 310 may be in a non-volatile memory (Non-Volatile Memory, NVM) or another storage medium. The model storage unit 310 stores a plurality of large language models (LLM) 311. The large language model 311 may be, but not limited to, a language model for dialog applications (LaMDA) 311, a large language model Meta AI (LLaMA) 311, a generative pre-trained transformer 3 (GPT-3), a bidirectional encoder representations from transformers (BERT) of Google, a generative pre-trained transformer 4 (GPT-4), a Codex (OpenAI Codex), a DALL E (OpenAI DALL-E), bidirectional and auto-regressive transformers (BART), a robustly optimized BERT approach (RoBERTa), a text-to-text transfer transformer (T5), or a pathways language model (PaLM).

Based on the foregoing language model 311, language models 311 with different requirements may be deployed in the model storage unit 310 based on different scenario requirements. For example, the LLaMA may be used in a scenario of English teaching, and the DALL-E may be used in a scenario of drawing teaching. The foregoing language models 311 may alternatively be used in fields such as a personal chat scenario, personal knowledge base management, file organization, file translation, health care, financial investment, manufacturing, retailing, transportation, or agriculture.

The data storage unit 320 stores a plurality of groups of file data 321. The file data 321 generally refers to a text file, an image file, an image file case, an audio file, a database file, a compressed file case, a brief file, a program code file, or the like. In some embodiments, the upper-layer operating system 322 may be stored in the intermediate storage device 300 or another storage device.

The upper-layer operating system 322 enables, based on an input command 210 issued by a user or an input command 210 generated by an application program, the processor 100 to send the input command 210 to the intermediate storage device 300. A type of the input command 210 may be further classified as a data access command 332 or a model operation command 331. After the intermediate storage device 300 receives the input command 210, the intermediate storage device 300 determines whether the input command 210 is the model operation command 331 or the data access command 332.

The data access command 332 may include related processing such as reading, writing, appending, updating, deleting, moving, copying, querying, or locking of the file data 321. The model operation command 331 includes an AI language model chat (AI LLM CHAT) instruction, an AI language model configuration model (AI LLM CONFIG MODEL) instruction, an AI language model fine tune (AI LLM FINE TUNE) instruction, an AI language model 311 authorization (AI LLM AUTH) instruction, an AI language model deploy model (AI LLM DEPLOY MODEL) instruction, an AI language model load dataset (AI LLM LOAD DATASET) instruction, an AI language model generate text (AI LLM GENERATE TEXT) instruction, an AI language model evaluate performance (AI LLM EVALUATE PERFORMANCE) instruction, an AI language model update parameters (AI LLM UPDATE PARAMETERS) instruction, an AI language model save model (AI LLM SAVE MODEL) instruction, an AI language model test model (AI LLM TEST MODEL) instruction, an AI language model reset model (AI LLM RESET MODEL), an AI language model train model (AI LLM TRAIN MODEL) instruction, an AI language model set permissions (AI LLM SET PERMISSIONS) instruction, or the like.

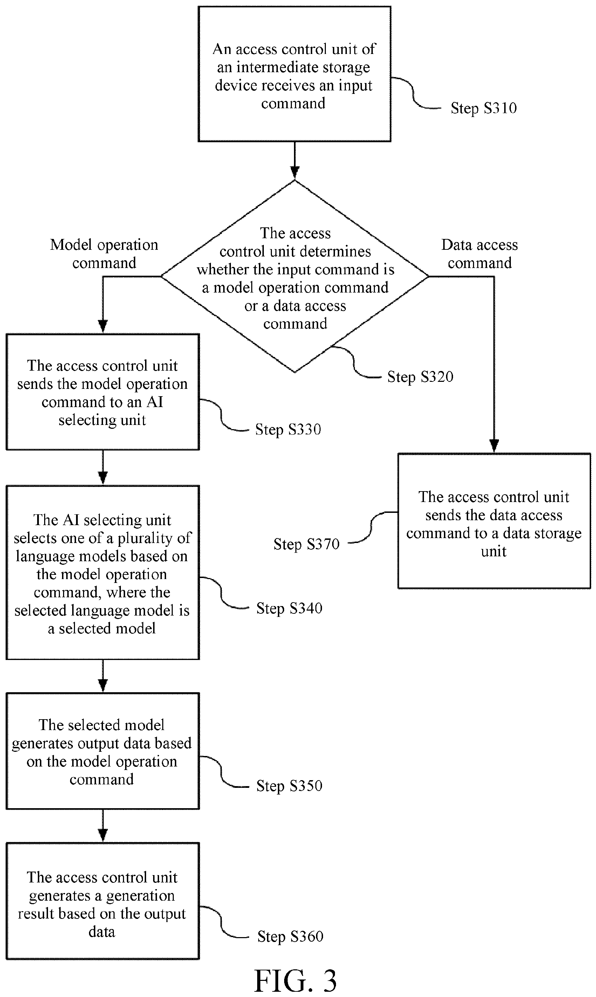

After the access control unit 340 receives the input command 210, the access control unit 340 performs the following steps based on a type of the input command 210, as shown in FIG. 3.

Step S310: The access control unit of the intermediate storage device receives the input command.

Step S320: The access control unit determines whether the input command is the model operation command or the data access command.

Step S330: If the input command is the model operation command, the access control unit sends the model operation command to the AI selecting unit.

Step S340: The AI selecting unit selects one of a plurality of language models based on the model operation command, where the selected language model is a selected model.

Step S350: The selected model generates output data based on the model operation command.

Step S360: The access control unit generates a generation result based on the output data.

Step S370: If the input command is the data access command, the access control unit sends the data access command to the data storage unit.

First, the computer 10 is booted, to cause the computer 10 to load the upper-layer operating system 322. The upper-layer operating system 322 receives the input command 210. Generally, the user may issue the input command 210 through an input interface. For example, when entering the input command 210 through a keyboard, the user may also click a relevant option through a mouse to form the input command 210.

After the upper-layer operating system 322 receives the input command 210, the upper-layer operating system 322 sends the input command 210 to the corresponding intermediate storage device 300 (corresponding to Step S310). There is at least one intermediate storage device 300. In FIG. 1, one intermediate storage device 300 is used as an example for description. The access control unit 340 of the intermediate storage device 300 determines whether the input command 210 is the data access command 332 or the model operation command 331 (corresponding to Step S320). If the access control unit 340 determines that the input command 210 is the model operation command 331, the access control unit 340 sends the model operation command 331 to the AI selecting unit 330 (corresponding to Step S330).

Next, the AI selecting unit 330 selects one of the plurality of language models 311 in the model storage unit 310, where the selected language model 311 is referred to as the selected model 312 (corresponding to Step S340). In the embodiments, the model storage unit 310 has the plurality of language models 311. Before selecting a language model 311, the AI selecting unit 330 determines a corresponding application scenario based on content of the model operation command 331. Then, the AI selecting unit 330 selects a corresponding language model 311 based on the selected application scenario. In FIG. 2A, the selected model 312 is described through a bold black-lined box as an example.

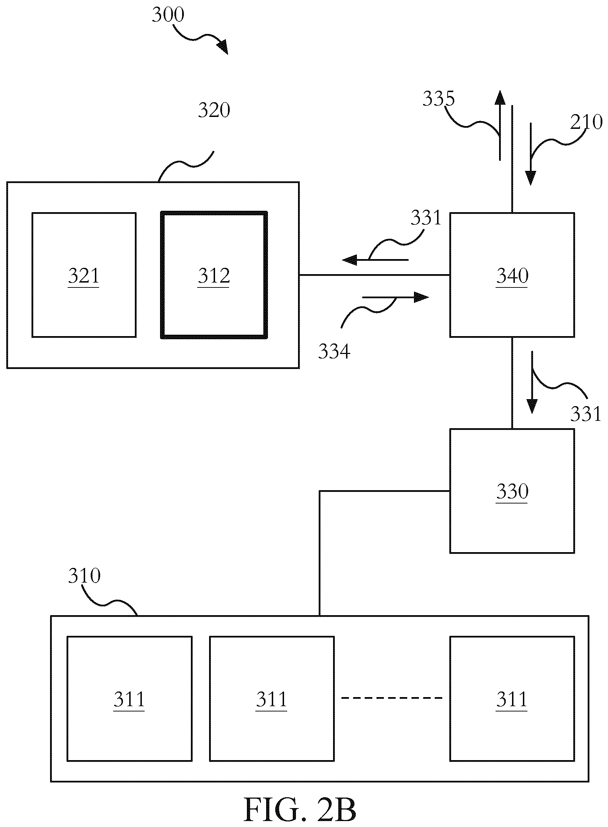

In an embodiment, the access control unit 340 may load the selected model 312 to the data storage unit 320, as shown in FIG. 2B. The selected model 312 may execute the model operation command 331 and generate output data 334. The data storage unit 320 sends the output data 334 to the access control unit 340, to cause the access control unit 340 to generate a generation result 335. Generally, the access control unit 340 encapsulates the output data 334 into an application programming interface (API) interface format corresponding to an upper-layer application program or an operating system. The API interface format may be as follows:

```
   {"prompt": "inner text", "max_tokens": 60, "temperature": 0.5}
```

The AI selecting unit 330 sends the model operation command 331 to the selected model 312. The selected model 312 generates the corresponding output data 334 based on the model operation command 331 (corresponding to Step S350). For example, if the model operation command 331 is [Translate the following English paragraph into Traditional Chinese], the AI selecting unit 330 may select the foregoing LLaMA model as a language model 311 for translation and teaching. The LLaMA model executes the model operation command 331 and generates translated output data 334: [Translate the following English paragraph into Traditional Chinese]. The access control unit 340 sends the generation result 335 to the upper-layer operating system 322. In addition, the AI selecting unit 330 may alternatively invoke a related language model 311, such as GPT-3, GPT-4, or LaMDA, based on an investment-related input command 210. If the input command 210 is the data access command 332, the access control unit 340 sends the data access command 332 to the data storage unit 320 (corresponding to Step S370). The access control unit 340 accesses corresponding file data 321 from the data storage unit 320. The intermediate storage device 300 sends selected file information to the upper-layer operating system 322.

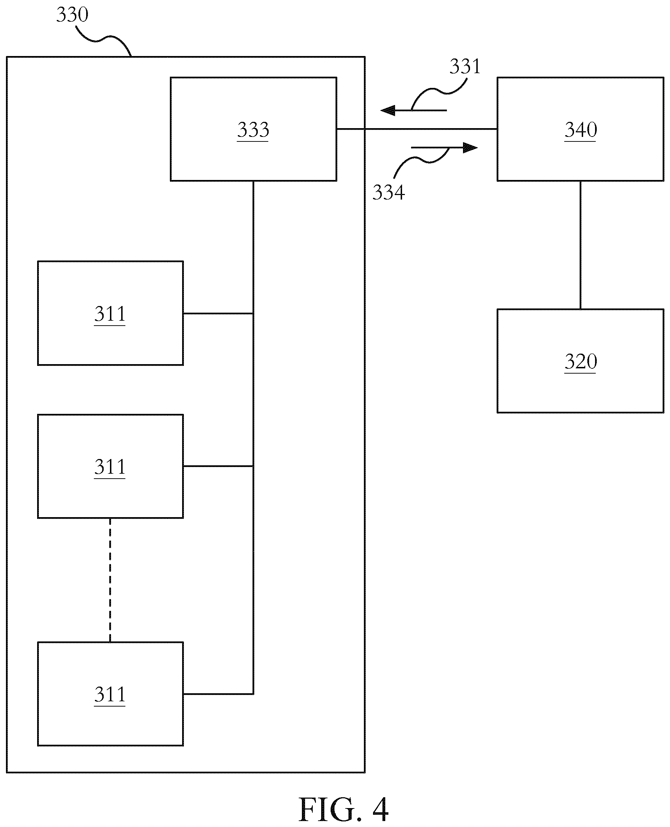

In some embodiments, referring to FIG. 4, the AI selecting unit 330 further includes a real-time operating system (RTOS) 333. The real-time operating system 333 provides task management, resource management, communication, or information security processing of the intermediate storage device 300. The real-time operating system 333 transmits the output data 334 to the access control unit 340, to cause the access control unit 340 to generate the generation result 335.

Referring to FIG. 4, the intermediate storage device 300 further includes a transmission interface. The access control unit 340 is connected to the transmission interface, and the transmission interface is further connected to the processor 100. A type of the transmission interface is an advanced technology attachment (ATA) interface, a serial ATA (SATA) interface, a universal serial bus (USB), a peripheral component interconnect express (PCIe) interface, or a non-volatile memory express (NVMe).

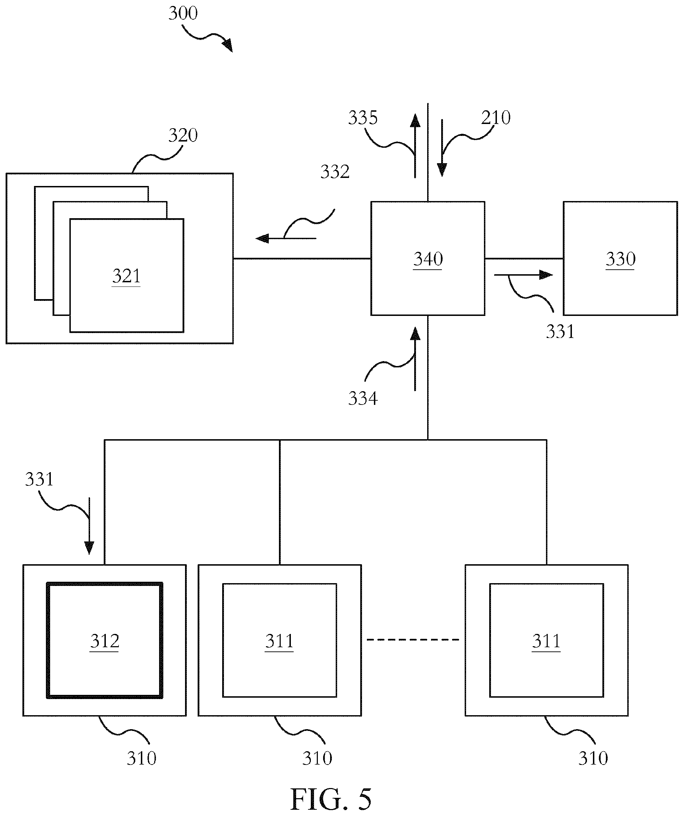

In some embodiments, referring to FIG. 5, a computer 10 includes a processor 100 and an intermediate storage device 300. The intermediate storage device 300 in the embodiments includes a plurality of model storage units 310, a data storage unit 320, an AI selecting unit 330, and an access control unit 340. The access control unit 340 is connected to the data storage unit 320 and the AI selecting unit 330. Each model storage unit 310 stores a language model 311. For a type of the language model 311, reference may be made to the foregoing descriptions. Alternatively, same language models 311 used in different application scenarios are stored in respective model storage units 310. For example, two LLaMA models are used in teaching of English and teaching of Python programming language. Therefore, the English teaching LLaMA model can be stored in an independent model storage unit 310, and the Python programming language teaching LLaMA model is stored in another model storage unit 310.

The access control unit 340 determines whether a received input command 210 is a model operation command 331 or a data access command 332. If the input command 210 is the data access command 332, the access control unit 340 accesses corresponding file data 321 from the data storage unit 320 based on the data access command 332, and responds the selected file data 321 to an upper-layer operating system 322. If the data access command 332 is the model operation command 331, the access control unit 340 sends the model operation command 331 to the AI selecting unit 330. The AI selecting unit 330 selects a corresponding model storage unit 310 and a language model 311 based on an application scenario of the model operation command 331. The selected model 312 executes the model operation command 331 and generates output data 334. The access control unit 340 sends a generation result 335 to the upper-layer operating system 322.

The intermediate storage device 300, the computer 10 system, and the computer 10 command preprocessing method provide a large language model 311 that may be used in a local computer 10. In this way, a risk of information leakage during network communication can be avoided, and a speed of invoking the large language model 311 can also be accelerated, thereby accelerating information response time. In addition, large language models 311 for different application scenarios may be deployed in the computer 10, so that services related to a plurality of different application scenarios can be provided in the same computer 10.

## Claims

1. An intermediate storage device (300), comprising:
a model storage unit (310), storing a plurality of language models;
a data storage unit (320), storing a plurality of groups of file data;
an AI selecting unit (330), selecting a language model based on a model operation command (331), to cause the selected language model to execute the model operation command (331) and generate output data (334); and
an access control unit (340), connected to the data storage unit (320) and the model storage unit (310), wherein the access control unit (340) receives an input command (210), and the access control unit (340) determines whether the input command (210) is the model operation command (331) or a data access command (332); and if the input command (210) is the model operation command (331), the access control unit (340) forwards the model operation command (331) to the AI selecting unit (330), to cause the selected language model to generate the output data (334), and the access control unit (340) generates a generation result based on the output data (334); or if the input command (210) is the data access command (332), the access control unit (340) accesses corresponding file data (321) from the data storage unit (320) based on the data access command (332).

2. The intermediate storage device (300) according to claim 1, wherein the AI selecting unit (330) further comprises a real-time operating system (333).

3. The intermediate storage device (300) according to claim 1, wherein the access control unit (340) sends the generation result or the selected file data (321) to an upper-layer operating system (322).

4. The intermediate storage device (300) according to claim 1, further comprising a transmission interface, wherein the access control unit (340) is connected to the transmission interface, and a type of the transmission interface comprises an advanced technology attachment interface, a serial ATA interface, a universal serial bus, a peripheral component interconnect express interface, or a non-volatile memory express.

5. An intermediate storage device (300), comprising:
a plurality of model storage units (310), wherein each model storage unit (310) stores a language model;
a data storage unit (320), storing a plurality of groups of file data;
an AI selecting unit (330), connected to the model storage units (310), wherein the AI selecting unit (330) selects a language model based on a model operation command (331), and the language model executes the model operation command (331) and generates output data (334); and
an access control unit (340), connected to the data storage unit (320) and the AI selecting unit (330), wherein the access control unit (340) receives an input command (210), and the access control unit (340) determines whether the input command (210) is the model operation command (331) or a data access command (332); and if the input command (210) is the model operation command (331), the access control unit (340) forwards the model operation command (331) to the AI selecting unit (330), to cause the selected language model to generate the output data (334), and the access control unit (340) generates a generation result based on the output data (334); or if the input command (210) is the data access command (332), the access control unit (340) accesses corresponding file data (321)from the data storage unit (320) based on the data access command (332).

6. The intermediate storage device (300) according to claim 5, wherein the AI selecting unit (330) further comprises a real-time operating system (333).

7. The intermediate storage device (300) according to claim 5, wherein the access control unit (340) sends the generation result or the selected file data (321) to an upper-layer operating system (322).

8. The intermediate storage device (300) according to claim 5, further comprising a transmission interface, wherein the access control unit (340) is connected to the transmission interface, and a type of the transmission interface comprises an advanced technology attachment interface, a serial ATA interface, a universal serial bus, a peripheral component interconnect express interface, or a non-volatile memory express.

9. A computer (10) system, comprising:
a processor (100), configured to execute an upper-layer operating system (322), wherein the processor (100) receives an input command (210) through the upper-layer operating system (322); and
an intermediate storage device (300), connected to the processor (100), wherein the intermediate storage device (300) comprises at least one model storage unit (310), a data storage unit (320), an AI selecting unit (330), and an access control unit (340); the access control unit (340) is connected to the data storage unit (320), the AI selecting unit (330), and each model storage unit (310); each model storage unit (310) stores a language model; and the data storage unit (320) stores a plurality of groups of file data, wherein
the upper-layer operating system (322) transmits the input command (210) to the access control unit (340), and the access control unit (340) determines whether the input command (210) is a model operation command (331) or a data access command (332); and if the input command (210) is the model operation command (331), the access control unit (340) forwards the model operation command (331) to the AI selecting unit (330), to cause the selected language model to generate output data (334), and the access control unit (340) generates a generation result based on the output data (334); or if the input command (210) is the data access command (332), the access control unit (340) accesses corresponding file data (321)from the data storage unit (320) based on the data access command (332).

10. A computer (10) command preprocessing method, comprising:
receiving, by an access control unit (340) of an intermediate storage device (300), an input command (210);
determining, by the access control unit (340), whether the input command (210) is a model operation command (331) or a data access command (332);
sending, by the access control unit (340), the model operation command (331) to an AI selecting unit (330) if the input command (210) is the model operation command (331);
selecting, by the AI selecting unit (330), one of a plurality of language models based on the model operation command (331), wherein the selected language model is a selected model (312);
generating, by the selected model (312), output data (334) based on the model operation command (331); and
generating, by the access control unit (340), a generation result based on the output data (334).

11. The computer (10) command preprocessing method according to claim 10, wherein the step of selecting, by the AI selecting unit (330), one of a plurality of language models based on the model operation command (331), wherein the selected language model is the selected model (312) comprises:
selecting, by the AI selecting unit (330), one of a plurality of model storage units (310), wherein each model storage unit (310) stores a corresponding language model.

12. The computer (10) command preprocessing method according to claim 10, wherein the step of selecting, by the AI selecting unit (330), one of a plurality of language models based on the model operation command (331), wherein the selected language model is the selected model (312) comprises:
storing the language models in a model storage unit (310); and
selecting, by the AI selecting unit (330), one of the language models from the model storage unit (310).

13. The computer (10) command preprocessing method according to claim 10, wherein if the input command (210) is the data access command (332), the access control unit (340) accesses corresponding file data (321) from a data storage unit (320) based on the data access command (332).
